# EUROPEAN PATENT SPECIFICATION

(11) **EP 1 344 459 B1**
(45) Date of publication and mention of the grant of the patent: **14.10.2009**
(21) Application number: 02075957.7
(22) Date of filing: 12.03.2002
(51) Int. Cl.: A23L 1/229

(54) **Seasoning compositions**
Würzmittelzusammensetzungen
Compositions d'assaisonnement

(43) Date of publication of application: 17.09.2003
(73) Proprietor: Société des Produits Nestlé S.A., 1800 Vevey (CH)
(72) Inventor: Labrunie, Thierry, 64200 Biarritz (FR); Henry, Sylvie, 8400 Winterthur (CH); Affolter, Michael, 1073 Savigny (CH); Schlichtherle-Cerny, Hedwig, 1093 La Conversion (CH)

(56) References cited:
- EP-A- 0 031 162
- EP-A- 0 809 942
- DE-A- 4 339 522
- US-A- 3 615 600
- US-A- 4 258 072
- US-A- 4 806 376
- US-A- 5 780 090
- DATABASE WPI Section Ch, Week 198011 Derwent Publications Ltd., London, GB; Class D13, AN 1980-19325C XP002209081 & JP 55 015715 A (AJINOMOTO KK), 4 February 1980 (1980-02-04)

## Description

The present invention relates to the subject of seasoning compositions for flavouring foodstuffs. The present invention particularly relates to compositions with umami taste.

Besides the four basic tastes sweet, acid, salty and bitter, the glutamate-like taste has been widely discussed in the literature and confirmed as the fifth basic taste (Chaudhari et al [2000] Nat. Neurosci. 3: 113). Monosodium glutamate (MSG) and certain nucleotide derivatives are present in various savoury foods. They are also widely used as flavour and taste enhancers in foodstuffs such as snacks and culinary products, for example. These molecules are known to elicit the unique taste called « umami », a savoury and delicious taste sensation. Umami taste substances have the ability to enhance the flavour and the mouthfeel of food products. In particular MSG and 5'-nucleotide derivatives exhibit a strong mutual synergism, thus increasing the umami taste sensation.

Since several years, the flavour and food industry is interested in developing alternative flavour enhancing systems for culinary products. Thus, food manufacturers aim at finding new molecules imparting the umami character as known from MSG in order to reduce its added amount in manufactured products.

In addition to MSG and 5'-nucleotides, some other molecules have been reported as umami-like compounds, such as organic acids like tartaric and succinic acid (Ney [1971] Z. Lebensm. Unters. Forsch. 146: 141; Velisek et al. [1978] Nahrung 22: 735) and di- to octa-peptides (Yamasaki and Maekawa [1978] Agric. Biol. Chem. 42: 1761; Noguchi et al. [1975] J. Agric. Food Chem. 23: 49).

Different kind of organic acid seasoning compositions giving umami taste are described, however they all contain glutamate or glutamate derivative, thus it is only a partial replacement of such compound (see for example JP 55015715, JP 55003741, EP 31162).

Furthermore, WO 9704667 discloses tripeptides containing a hydrophobic amino acid residue and at least one acidic amino acid residue as well as amino acid derivatives with an *N*-lactoyl residue as flavouring ingredients to impart savoury taste and increase the mouthfeel of foodstuffs. It is also disclosed that these peptides and derivatives can mimic organoleptic features of MSG.

US 5366747 describes the use of one or more of the acids : aconitic acid, gluconic acid and/or succinic acid taken alone or in combination further together with sclareolide in augmenting or enhancing the organoleptic qualities of foodstuffs, particularly with respect to imparting a umami effect.

US 4258072 discloses a mix seasoning comprising MSG, 5'-nucleotide, table salt, succinic acid and/or succinate and at least one alkali salt of an organic acid selected from the group comprising sodium fumarate, sodium citrate, sodium or calcium lactate, sodium maleate, sodium tartrate, sodium ascorbate and sodium aspartate. Such a mix seasoning is described as enhancing the desirable characteristics of monosodium glutamate.

US 3615600 describes flavouring mixtures containing glutamic acid, a nucleotide and critical amounts of succinic acid and a hydroxycarboxylic acid including lactic acid.

The aim of the present invention is concerned with the problem of providing alternative seasoning composition to MSG in order to impart umami taste to food products.

To this end, the present invention relates to a seasoning composition useful for imparting umami taste to food products according to claim 1.

The seasoning composition according to the invention comprises at least one, preferably at least two, more preferably at least three and most preferably at least four up to all the nine organic acids which, in combination with the nucleotide flavour enhancer, are able to elicit umami taste perception upon consumption. The concentration of each of the different components of the composition according to the present invention may be in the range of from 0 to 10 g/litre, preferably from 0,1 to 7 g/litre and more preferably from 0,25 to 5 g/litre. Such concentration ranges correspond to the end product intended to be consumed, the seasoning composition may however by prepared in a concentrated form and diluted upon use. 0 g/litre indicates that the component is neither essential nor crucial but may contribute to the overall umami taste effect of the composition according to the invention. Of course, the concentration ranges of each of the components of the composition will vary upon the intrinsic contribution of such component to the global umami perception of the composition. Thus, the nucleotide flavour enhancer concentration may preferably vary from 0,01 to 1 g/litre. The concentration of acetic acid may vary from 0,1 to 1 g/litre, preferably from 0,1 to 1 g/litre. The concentration of ascorbic acid may vary from 0 to 7 g/litre, preferably from 0,5 to 5 g/litre. The concentration of aspartic acid may vary from 0,5 to 10 g/litre, preferably from 0,5 to 8 g/litre. The concentration of citric acid may vary from 0,1 to 2 g/litre, preferably from 0,2 to 1 g/litre. The concentration of fumaric acid may vary from 0 to 1,5 g/litre, preferably from 0,1 to 1 g/litre. The concentration of lactic acid may vary from 0 to 6 g/litre, preferably from 0 to 5 g/litre. The concentration of malic acid may vary from 0 to 2 g/litre, preferably from 0,1 to 1 g/litre. The concentration of succinic acid may vary from 0 to 1 g/litre, preferably from 0 to 0,5 g/litre. The concentration of tartaric acid may vary from 0 to 2 g/litre, preferably from 0,1 to 1 g/litre.

The nucleotide flavour enhancer employed according to the present invention is selected in the group consisting of 5'-ribonucleotides. As such are known for example adenosine-5'-monophosphate (5'-AMP), guanosine-5'-monophosphate (5'-GMP), inosine-5'-monophosphate (5'-IMP), xanthosine-5'-monophosphate (57-XMP), uridine-5'-monophosphate (5'-UMP), cytidine-5'-monophosphate (5'-CMP), their amides, desoxy derivatives, salts and the like. The quantity employed may differ depending upon the flavour enhancing power desired. The quantity needed in order for the seasoning to have suitable flavour enhancing power and to achieve the object of the present invention will vary depending on which nucleotide flavour enhancer is used. The quantity of nucleotide flavour enhancer, used alone or mixed, may vary from 0,01 to 1 g/litre.

The seasoning composition according to the present invention also comprises yeast extract as an additional compound up to 5 g/litre, preferably up to 2 g/litre, more preferably up to 1 g/litre. Such compound is able to increase and/or enhance the umami perception and give full bodyness to the composition according to the present invention and therefore to the food products containing the seasoning composition according to the present invention.

The organic acid components will not exclusively occur in the acid form in the composition according to the present invention, but partially in the form of their salt since the pH of the ready-for-use product may be adjusted to about 4 to 8, preferably 5 to 7.

Another aspect of the present invention deals with the use of the compositions according to the invention in food products in an effective amount in order to induce an umami taste perception upon consumption.

The food products that are concerned by the use of the composition according to the present invention may be dehydrated products such as bouillons, soups, snacks, cereal products, process flavours, culinary products such as cooking aids or powdered flavourings for example, but also intermediate moisture foods such as spreadable paste, sausage, for example and petfoods as well. However, the composition according to the present invention may also be used in full moisture food like liquid seasoning, liquid bouillons, soups, sauces, chilled prepared meals and frozen meals, such as pizzas for example.

In a third aspect, the present invention deals with a method for inducing an umami taste perception to consumers of a food product by adding an effective amount of the compositions according to the present invention to the food product.

Hence, the compositions according to the present invention allow to improve and increase the mouthfeel of the food to which they are added. Thus, it has been found that the compositions according to the present invention are able to mimic the taste sensory properties of monosodium glutamate, the typical umami taste ingredient widely used as a flavour enhancing compound. Thus, the composition according to the present invention can contribute to give or to reinforce the umami taste feature in the food products in which they are incorporated. Such compositions can then replace, at least partially, MSG (or can be combined with MSG in foodstuffs in which flavour enhancers are desired). The compositions according to the invention can be used to complement or to replace MSG in order to confer umami taste to food products.

Such results are particularly unexpected and surprising. Indeed even if some seasoning compositions containing organic acids have been presented as able to mimic umami taste, MSG was always present in such compositions. According to our knowledge, it is the first time that a seasoning composition eliciting umami taste is disclosed without MSG. Furthermore, no prior art does disclose any information regarding the umami contributing properties of acetic acid in seasoning compositions.

Preferably, the seasoning composition according to the present invention is in the liquid form and may thus be prepared by dissolution of the different components of the composition in water or any other bouillon base, for example. Upon dissolution in water, the use of different organic acid in the composition according to the invention would lead to an acidic pH which may be detrimental to the organoleptic quality of the obtained composition. Then, if the pH of the composition obtained is too low, i.e. less than 3 or less than 4, it may be adjusted thanks to NaOH, for example, in order to be in accordance of the general pH range of food product, i.e. between 4 and 8, preferably between 5 and 7. In such a pH range, at about pH 6, the majority of the organic acids of the composition according to the present invention will be present in their alkali salt form.

As said before, the seasoning composition according to the present invention may be prepared by dissolution of at least one nucleotide flavour enhancer and at least one organic acid selected in the group consisting of acetic acid, ascorbic acid, aspartic acid, citric acid, fumaric acid, malic acid, tartaric acid, succinic acid and lactic acid and optionally adjusting the pH in the range of 4 to 8, preferably 5 to 7. The dissolution may be achieved in pure water but it may be done in any kind of water-based medium such as bouillon, liquid seasoning, soup, for example.

However, the composition according to the present invention may also be prepared by dissolving the acid salts of the selected acids, in water of water-based medium permitting to obtain a product within the right pH range.

In order to avoid any taste interference with other components of the medium, the components of the composition according to the present invention will be dissolved in pure water or in neutral bouillon base without added MSG in order to evaluate the direct umami taste-imparting effect.

The evaluation of the taste of the composition may be achieved by a panel of trained panellists in order to assign different kind of attributes to the compositions, and among then umami attribute.

The chosen taste attributes are the following : total intensity, salty, sweet, acid, bitter, MSG (umami), astringent, intensity, and well-balanced. The taste evaluation may be done in order to obtain a product able to mimic the taste profile of commercial product containing MSG like « MAGGI BOUILLON DE VOLAILLE » as a reference. Then, a chicken broth without added MSG may be realised, complemented with the composition according to the present invention, and evaluated versus the commercial reference. It has therefore been found that a composition according to the present invention is able to elicit umami taste in a bouillon without MSG and also able to give fullbodyness without bitterness and a well-balanced taste perception.

The present invention is described in detail in the following examples.

### EXAMPLE 1

A dry base for vegetable bouillon is prepared according to the following recipe :

| % (in weight) | |
|---|---|
| Salt | 50 |
| Sugar | 21 |
| Palm oil | 7 |
| Onion in powder | 7 |
| Carrot extract | 5 |
| Leak extract | 4 |
| Potato starch | 4 |
| Aroma | 2 |

The dry base is used for manufacturing different bouillons sample by dissolution in hot water.

The following samples are prepared :
**Sample 1:** Base (8.88 g/l)
**Sample 2:** Base (8.88 g/l) + ribotides (0.04 g/l) + Aspartic acid (10 g/l) + NaOH for adjusting pH to 7.
**Sample 3:** Base (8.88g/l) + MSG (2.2 g/l) + Ribotides (0.12 g/l) + yeast extract (0.8 g/l)

The different samples were tasted by a trained panel for the attribute « UMAMI» and ranked by intensity regarding this attribute.

The result of the taste assay was that sample 3 was the strongest and sample 1 did not elicit any umami attribute. Sample 2 elicited a umami attribute less strong than sample 3 but with easily perceivable umami intensity.

Tests one-by-one confirmed the results :
- a significant difference between samples 1 and 2 with a risk of 6%
- a significant difference between samples 2 and 3 with a risk of 5%.

These results confirm that a seasoning according to the present invention is useful and effective for imparting umami taste to a bouillon as compared to a reference containing MSG and therefore useful for replacing, at least partially this MSG.

### EXAMPLE 2

The following samples are prepared using the base used in example 1 :
**Sample 1:** Base (8.88 g/l)
**Sample 2:** Base (8.88 g/l) + ribotides (0.04 g/l) + Aspartic acid (7 g/l) + Acetic acid (0.3 g/l) + Malic acid (2 g/l) + NaOH for adjusting pH to 7
**Sample 3:** Reference = Base (8.88 g/l) + MSG (2.2 g/l) + Ribotides (0.12 g/l) + yeast extract (0.8 g/l)

Again, the different samples were tasted by a trained panel for the attribute « UMAMI » and ranked by intensity regarding this attribute.

The result of the taste assay was that sample 3 was the strongest and sample 1 did not elicit any umami attribute. Sample 2 elicited a umami attribute less strong than sample 3 but easily perceivable.

Tests one-by-one confirmed the results :
- a significant difference between samples 1 and 2 with a risk of 5%
- a significant difference between samples 2 and 3 with a risk of 5%.

These results confirm that a seasoning according to the present invention is useful and effective for imparting umami taste to a bouillon as compared to a reference containing MSG and therefore useful for replacing, at least partially this MSG.

## Claims

1. Seasoning composition useful for imparting umami taste to food products comprising
- at least one nucleotide flavour enhancer selected in the group consisting of adenosine-5'-monophosphate (5'-AMP), guanosine-5'-monophosphate (5'-GMP), inosine-5'-monophosphate (5'-IMP), xanthosine-5'-monophosphate (5'-XMP), uridine-5'-monophosphate (5'-UMP), cytidine-5'-monophosphate (5'-CMP), their amides, desoxy derivatives, salts and the like
- at least one organic acid or salt thereof selected in the group consisting of acetic acid, ascorbic acid, aspartic acid, citric acid, fumaric acid, malic acid, tartric acid, succinic acid and lactic acid,
- yeast extract for up to 5 g/litre and
- without added MSG.

2. Use of the composition according to claim 1 in food products in an effective amount in order to induce an umami taste perception upon consumption to replace, at least partially, MSG in order to confer umami taste to food products.

3. Method for inducing an umami taste perception to consumers of a food product by adding an effective amount of the composition according to claim 1 to the food product.

## Patentansprüche

1. Würzmittelzusammensetzung, welche nützlich ist, um Nahrungsmittelprodukten einen Umami-Geschmack zu verleihen, umfassend
- mindestens einen Nukleotid-Geschmacksverstärker, ausgewählt von der Gruppe, bestehend aus Adenosin-5'-monophosphat (5'-AMP), Guanosin-5'-monophosphat (5'-GMP), Inosin-5'-monophosphat (5'-IMP), Xanthosin-5'-monophosphat (5'-XMP), Uridin-5'-monophosphat (5'-UMP) und Cytidin-5'-monophosphat (5'-CMP), deren Amiden, Desoxyderivaten, Salzen und dergleichen
- wenigstens eine organische Säure oder ein Salz hievon, ausgewählt von der Gruppe, bestehend aus Essigsäure, Ascorbinsäure, Asparaginsäure, Zitronensäure, Fumarsäure, Apfelsäure, Weinsäure, Bernsteinsäure und Milchsäure,
- Hefeextrakt für bis zu 5 g/Liter und
- ohne zugesetztem MSG.

2. Verwendung der Zusammensetzung nach Anspruch 1 in Nahrungsmittelprodukten in einer wirksamen Menge, um einen Umami-Geschmackseindruck beim Verzehr hervorzurufen, um wenigstens teilweise MSG zu ersetzen, um Nahrungsmittelprodukten einen Umami-Geschmack zu verleihen.

3. Verfahren zum Hervorrufen eines Umami-Geschmackseindrucks bei Konsumenten eines Nahrungsmittelprodukts durch Zusetzen einer wirksamen Menge der Zusammensetzung nach Anspruch 1 zum Nahrungsmittelprodukt.

## Revendications

1. Composition d'assaisonnement utile pour conférer un goût d'umami aux produits alimentaires, comprenant :
- au moins un amplificateur d'arôme nucléotidique, choisi parmi le groupe consistant en le 5'-monophosphate d'adénosine (5'-AMP), le 5'-monophosphate de guanosine (5'-GMP), le 5'-monophosphate d'inosine (5'-IMP), le 5'-monophosphate de xanthosine (5'-XMP), le 5'-monophosphate d'uridine (5'-UMP), le 5'-monophosphate de cytidine (5'-CMP), leurs amides, dérivés désoxy, sels et similaires ;
- au moins un acide organique ou son sel, choisi parmi le groupe consistant en l'acide acétique, l'acide ascorbique, l'acide aspartique, l'acide citrique, l'acide fumarique, l'acide malique, l'acide tartrique, l'acide succinique et l'acide lactique,
- de l'extrait de levure à jusqu'à 5 g/litre, et
- sans MSG ajouté.

2. Utilisation de la composition selon la revendication 1, dans des produits alimentaires, en une quantité efficace pour induire une perception de goût d'umami lors de la consommation, afin de remplacer, au moins partiellement, le MSG pour conférer un goût d'umami aux produits alimentaires.

3. Procédé pour conférer une perception de goût d'umami à des consommateurs de produit alimentaire consistant en l'ajout d'une quantité efficace de la composition selon la revendication 1 au produit alimentaire.
